# DEMANDE DE BREVET EUROPEEN

(11) **EP 4 553 406 A1**
(43) Date de publication de la demande: **14.05.2025**
(21) Numéro de dépôt: 24212775.1
(22) Date de dépôt: 13.11.2024
(51) Int. Cl.: F24S 60/30, F24S 20/60, F24S 10/00, F24S 20/66, F24S 80/40, F24S 80/50, F24S 80/58

(54) **PANNEAU SALAIRE THERMIQUE À INERTIE**

(30) Priorité: 13.11.2023 FR 2312397; 12.02.2024 FR 2401325
(71) Demandeur: E=MV² SAS, 09500 La Bastide-de-Bousignac (FR); Delpeyrou, José, 11620 Villemoustaussou (FR)
(72) Inventeur: DELPEYROU, José, 11620 Villemoustaussou (FR)
(74) Mandataire: Rhein, Alain

(57) **Abrégé**

L'invention concerne un dispositif de panneau solaire thermique à inertie 1 comportant, essentiellement, une paroi périphérique 2, une paroi avant 7 et une paroi arrière 8 délimitant un volume intérieur 9, au moins la paroi périphérique 2 est constituée en un matériau isolant rigide. Avantageusement :
- la paroi avant 7 est substantiellement constituée, depuis le côté externe 10 en direction du volume intérieur 9 de ce dispositif 1 :
• d'au moins deux plaques en matériau translucide 11, 11a, 11b, 11c, 11d, préférentiellement transparent, entretoisées d'une lame 12, 12a, 12b, 12c d'un fluide gazeux ;
• d'une plaque absorbante 13 des rayonnements lumineux entretoisée d'une lame 12d d'un fluide gazeux par rapport à la plaque en matériau translucide 11d du côté interne 14 au volume intérieur 9 de cette paroi avant 7 ;

- dans le volume intérieur 9, entre un fond 15 défini par la paroi arrière 8 et la plaque absorbante 13 de la paroi avant 7, est disposée au moins une unité de stockage 16 de fluide caloporteur primaire.

## Description

La présente invention concerne un dispositif de panneau solaire thermique à inertie.

On connaît, d'ores et déjà, de nombreux dispositifs de panneau solaire thermique qui ont pour objectif principal de transformer l'énergie solaire en énergie thermique pour la production d'eau chaude. Selon le domaine d'application, cette eau chaude peut être utilisée directement pour réchauffer l'eau d'un bassin tel qu'une piscine, tout comme elle peut contribuer, au travers d'un échangeur de chaleur à chauffer un réseau secondaire d'eau chaude sanitaire ou de chauffage d'une habitation.

Il existe différentes technologies de panneaux solaires thermiques. Ainsi, il est connu les panneaux plans vitrés sous forme d'un caisson de faible épaisseur en comparaison à sa longueur et à sa largeur, comprenant un fond dans lequel prend position un isolant résistant aux fortes températures. Sur cet isolant est habituellement positionné un réflecteur au-dessus duquel s'étend un réseau de conduites de fluide caloporteur. Une plaque absorbante des rayonnements solaires, encore dénommée absorbeur, repose sur ces conduites, tandis que le caisson est finalement refermé de manière étanche par une plaque en verre. Celle-ci, souvent choisie en verre trempé, crée un effet de serre pour favoriser le chauffage du fluide caloporteur dans les différentes conduites.

Il est encore connu les capteurs tubulaires sous vide comprenant une pluralité de tubes en verre placés les uns à côté des autres sur une structure support en forme de panneau. A l'intérieur d'un tube, maintenu sous vide pour éviter les déperditions de chaleur, s'étend une boucle d'une conduite en cuivre à l'arrière d'un absorbeur.

Les panneaux solaires thermiques tels que décrit plus haut ont des fonctionnements avec très peu d'inertie et des effets de pointe en ce sens qu'ils sont en mesure, sous l'impact des rayons solaires, de porter très rapidement et à haute température le fluide caloporteur qui les traverse, ce fluide caloporteur retombant tout aussi rapidement en température en l'absence d'ensoleillement. Il est donc indispensable d'associer à de tels panneaux solaires thermiques connus un ballon tampon de fluide caloporteur permettant d'atténuer ces variations brutales.

Pour autant, en période prolongée d'ensoleillement et donc de production importante de fluide caloporteur à température élevée, les installations intégrant de tels panneaux solaires thermiques sont souvent mises à rude épreuve, notamment lorsque le fluide caloporteur vient à atteindre sa température d'ébullition.

Finalement, il peut être reproché à ces panneaux solaires thermiques un manque d'inertie et un fonctionnement de type tout ou rien selon la présence ou l'absence de rayonnement solaire.

De plus, de tels panneaux solaires thermiques connus sont habituellement de conception complexe et coûteuse en raison des matériaux mis en oeuvre :
structure métallique, généralement en aluminium, du panneau, surface transparente en verre trempé, réseau de conduites de fluide caloporteur en cuivre, etc.

Par ailleurs, la taille de ces panneaux solaires thermique est nécessairement limitée par la dimension standard d'un panneau de verre trempé, mais, plus généralement encore, par le poids maximal que peut avoir un tel panneau pour être aisément manipulé en vue de permettre son installation en toiture, notamment.

C'est dans le cadre d'une première démarche inventive qu'il a été imaginé un dispositif de panneau solaire thermique à inertie, c'est-à-dire capable d'absorber et de stocker, notamment au travers d'un fluide caloporteur primaire, des calories résultant de rayonnement solaire, mais aussi d'empêcher, du moins de réduire les flux thermiques, notamment par convection et conduction entre le fluide caloporteur primaire et l'environnement extérieur de ce dispositif de panneau solaire thermique à inertie.

Dans le cadre d'une seconde démarche inventive, il a encore été imaginé de stocker le fluide caloporteur primaire dans des unités de stockage dans un tel dispositif de panneau solaire de manière à contribuer au chauffage d'un fluide caloporteur secondaire traversant ce dispositif de panneau solaire thermique à inertie entre une conduite d'entrée et une conduite de sortie en traversant une enceinte de chauffage contenant les unités de stockage de fluide caloporteur primaire.

Ainsi, l'invention concerne un dispositif de panneau solaire thermique à inertie comportant, essentiellement, une paroi périphérique, une paroi avant et une paroi arrière délimitant un volume intérieur, au moins la paroi périphérique est constituée en un matériau isolant rigide, caractérisé en ce que :
- la paroi avant est substantiellement constituée, depuis le côté externe, en direction du volume intérieur de ce dispositif :
   - d'au moins deux plaques en matériau translucide, préférentiellement transparent, entretoisées d'une lame d'un fluide gazeux ;
   - d'une plaque absorbante des rayonnements lumineux entretoisée d'une lame d'un fluide gazeux par rapport à la plaque en matériau translucide du côté interne au volume intérieur de cette paroi avant ;
- dans le volume intérieur, entre un fond défini par la paroi arrière et la plaque absorbante de la paroi avant, est disposée au moins une unité de stockage de fluide caloporteur primaire ;
- le dispositif de panneau solaire thermique à inertie comporte encore un circuit d'un fluide caloporteur secondaire s'étendant entre une conduite d'entrée et une conduite de sortie en traversant une enceinte de chauffage délimitée par le volume intérieur et les unités de stockage de fluide caloporteur primaire.

Avantageusement le dispositif de panneau solaire thermique est en forme de parallélépipède rectangle.

Selon une autre particularité de l'invention, la paroi arrière est constituée, depuis le côté externe en direction du volume intérieur du dispositif 1 :
- d'au moins deux plaques en matériau translucide préférentiellement transparent, entretoisées d'une lame d'un fluide gazeux ;
- d'une plaque absorbante des rayonnements lumineux entretoisée d'une lame d'un fluide gazeux par rapport à la plaque en matériau translucide du côté interne au volume intérieur de cette paroi arrière.

Avantageusement, les plaques en matériau translucide, préférentiellement transparent, sont en un matériau synthétique de type polycarbonate, polyester, acrylique ou autre.

Selon l'invention, la largeur des lames de fluide gazeux entre les plaques translucides préférentiellement transparentes est comprise entre 0,5 cm et 5 cm, préférentiellement entre 1cm et 3 cm.

Selon une autre particularité, la lame de fluide gazeux entre la plaque absorbante par rapport à la plaque en matériau translucide du côté interne au volume intérieur de la paroi avant ou, selon le cas, la paroi arrière est comprise entre 0,5 cm et 5 cm, préférentiellement entre 1cm et 3 cm.

Avantageusement, la ou les unités de stockage de fluide caloporteur sont conçues à partir de bouteilles recyclées en matière synthétique, par exemple en Polyéthylène Téréphtalate (PET),

La ou les unités de stockage de fluide caloporteur sont au moins en contact avec la plaque absorbante de la paroi avant et/ ou la paroi arrière.

Selon encore une autre particularité de l'invention, ce dispositif de panneau solaire thermique à inertie comporte sur le côté externe de sa paroi périphérique des moyens d'emboitement réciproque de type mâle/femelle conçus pour emboîter, selon le cas deux dispositifs de panneau l'un sur l'autre et/ou l'un à côté de l'autre.

Plus particulièrement de tels dispositifs de panneau selon l'invention sont susceptibles de constituer des modules de construction.

L'invention sera mieux comprise à la lecture de la description qui va suivre se rapportant à des exemples de réalisation illustrés dans les dessins en annexe.

[Fig.1] La Figure 1 représente de manière schématisée et en perspective le dispositif de panneau solaire thermique à inertie selon l'invention ;

[Fig.2] La Figure 2 représente de manière schématisée et en coupe transversale un dispositif de panneau solaire thermique à inertie selon un premier mode d'exécution ;

[Fig.3] La Figure 3 représente de manière schématisée et en coupe transversale un dispositif de panneau solaire thermique à inertie selon un second mode d'exécution ;

[Fig.4] La Figure 4 est une représentation schématisée d'une coupe longitudinale selon IV-IV de la figure 2 et 3 ;

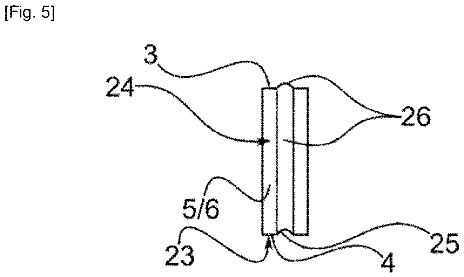

[Fig.5] La Figure 5 est une vue schématisée latérale d'un dispositif de panneau solaire thermique à inertie selon l'invention comportant des moyens d'emboitement périphérique.

La présente invention concerne un dispositif de panneau solaire thermique à inertie 1 comme visible dans les différentes figures des dessins ci-joints.

Ce dispositif de panneau solaire thermique 1 comporte, essentiellement, une paroi périphérique 2. Si ce dispositif de panneau solaire thermique 1 est représenté dans les figures de parallélépipède rectangle, facilitant considérablement sa conception. Il est évident que la présente invention ne saurait être limitée à une telle forme.

Ainsi, ce dispositif de panneau solaire thermique à inertie 1 de forme parallélépipédique comporte une paroi périphérique 2 comprenant une paroi de dessus 3, une paroi de dessous 4, une première paroi latérale 5 à une première extrémité latérale et une seconde paroi latérale 6 à une seconde extrémité latérale. Il comporte, encore, une paroi avant 7 et une parois arrière 8. L'ensemble de ces parois, à savoir la paroi périphérique 2, la paroi avant 7 et la paroi arrière 8 délimite un volume intérieur 9 de ce dispositif de panneau solaire thermique à inertie 1.

Selon l'invention, au moins la paroi périphérique 2 est constituée préférentiellement en un matériau isolant rigide. Avantageusement, cette paroi périphérique 2 est constituée en polystyrène extrudé communément dénommé XPS.

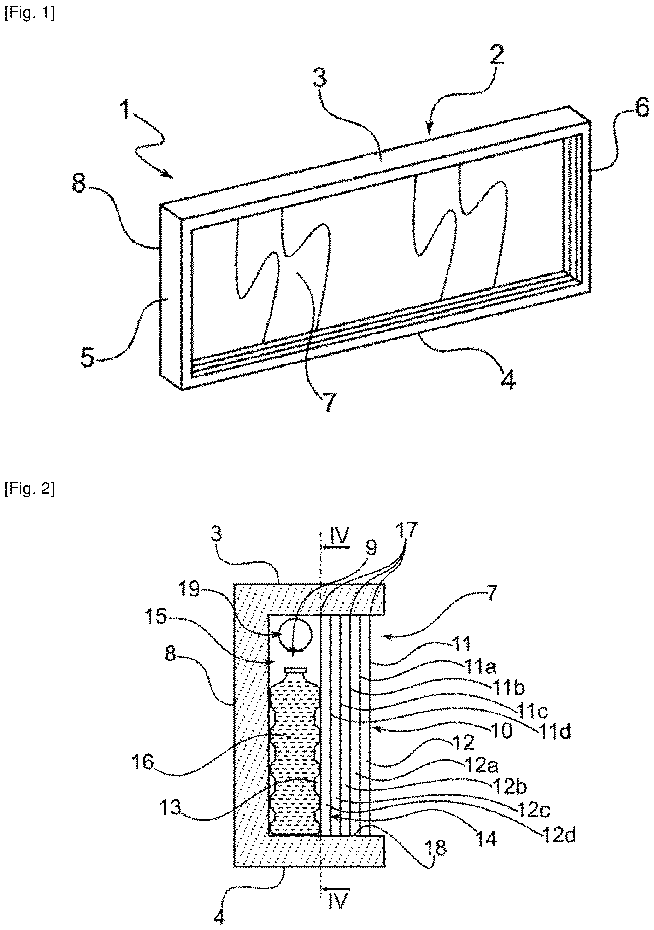

Selon un premier mode de réalisation visible dans la figure 2, la paroi arrière 8 de ce dispositif de panneau solaire thermique 1 est également constitué en un matériau isolant rigide, en particulier en polystyrène extrudé.

Selon l'invention, la paroi avant 7 est substantiellement constituée, depuis le côté externe 10, en direction du volume intérieur 9 de ce dispositif 1 :
- d'au moins deux plaques en matériau translucide 11, 11a, 11b, 11c, 11d préférentiellement transparent, entretoisées d'une lame 12, 12a, 12b, 12c d'un fluide gazeux ;
- d'une plaque absorbante 13 des rayonnements lumineux entretoisée d'une lame 12d d'un fluide gazeux par rapport à la plaque en matériau translucide 11d du côté interne 14 au volume intérieur 9 de cette paroi avant 7.

Le fluide gazeux entre les plaques en matériau translucide 11, 11a, 11b, 11c, 11d ou encore entre la plaque absorbante 13 et la plaque en matériau translucide 11d du côté interne 14 au volume intérieur 9 de cette paroi avant 7 est préférentiellement de l'air, bien que l'invention n'y soit pas limitée.

Selon une particularité de l'invention, dans le volume intérieur 9 de ce dispositif 1, entre un fond 15 défini par la paroi arrière 8 et la plaque absorbante 13 de la paroi avant 7, est disposée au moins une, préférentiellement une pluralité d'unités de stockage 16 de fluide caloporteur. Avantageusement, celles-ci sont au moins en contact avec la plaque absorbante 13.

Les plaques en matériau translucide 11, 11a, 11b, 11c, 11d, préférentiellement transparent, sont en un matériau synthétique de type polycarbonate, polyester, acrylique..., l'invention n'étant pas limitée à cette énumération de matériaux.

La largeur des lames de fluide gazeux 12, 12a, 12b, 12c, préférentiellement d'air, entre les plaques translucides préférentiellement transparentes 11, 11a, 11b, 11c, peut être comprise entre 0,5 cm et 5 cm, préférentiellement entre 1cm et 3 cm. Avantageusement, elle est de l'ordre de 2cm. A noter que cette largeur des lames de fluide gazeux 12, 12a, 12b, 12c n'est pas nécessairement identique entre toutes les plaques 11, 11a, 11b, 11c, 11d.

De même, la lame de fluide gazeux 12d entre la plaque absorbante 13 par rapport à la plaque en matériau translucide 11d du côté interne 14 au volume intérieur 9 de cette paroi avant 7 peut être comprise entre 0,5 cm et 5 cm, préférentiellement entre 1cm et 3 cm. Avantageusement, elle est de l'ordre de 2cm.

Selon l'invention, les plaques en matériau translucide, préférentiellement transparent, 11, 11a, 11b, 11c, 11d, ainsi que la plaque absorbante 13 sont insérées en périphérie dans des rainures 17 adaptées que comporte la paroi périphérique 2 sur son côté 18, orienté en direction du volume intérieur 9 du dispositif de panneau 1.

En l'occurrence, dans le mode de réalisation d'un dispositif 1 de forme parallélépipédique, ces rainures sont ménagées sur ce côté 18 au niveau de la paroi de dessus 3, la paroi de dessous 4, la première paroi latérale 5 et la seconde paroi latérale 6.

Avantageusement, les plaques en matériau translucide, préférentiellement transparent, 11, 11a, 11b, 11c, 11d, ainsi que la plaque absorbante 13 sont collées dans lesdites rainures 17.

En ce qui concerne la ou les unités de stockage 16 de fluide caloporteur, elles peuvent être conçues en tout type de matériau préférentiellement transparent ou au moins translucide. Selon un mode de réalisation avantageux, ce ou ces unités de stockage 16 de fluide caloporteur sont définies par des bouteilles recyclées en matière synthétique, par exemple en Polyéthylène Téréphtalate (PET). Les bouteilles en matière synthétique choisies pour les recycler en tant qu'unités de stockage 16 présentent, préférentiellement, un certain nombre de nervures ou stries périphériques augmentant leur surface d'échange.

Le fluide caloporteur contenu dans de telle unité de stockage 16 peut être de l'eau, préférentiellement déminéralisée, éventuellement additionnée d'un produit antigélif, tel que de l'alcool ou autre.

Selon l'invention, le dispositif de panneau solaire thermique à inertie 1 comporte encore un circuit 19 d'un fluide caloporteur secondaire s'étendant entre une conduite d'entrée 20 et une conduite de sortie 21 en traversant une enceinte de chauffage 22 délimitée par le volume intérieur 9 et les unités de stockage 16 de fluide caloporteur primaire. En somme, cette enceinte de chauffage 22 s'étend autour du ou des unités de stockage 16 dans la limite du volume interne 15 du dispositif 1

Ainsi, ce fluide caloporteur secondaire qui peut être, là encore, de l'air, vient se réchauffer au contact avec les unités de stockage 16 entre l'entrée 20 et la sortie 21 du dispositif de panneau 1. Cet air réchauffé peut ensuite servir au chauffage d'une habitation par exemple.

La conduite d'entrée 20 et la conduite de sortie 21 peuvent déboucher dans l'enceinte de chauffage 22, respectivement, au niveau d'une première extrémité latérale 27 et d'une seconde extrémité latérale 28 de manière que le fluide caloporteur secondaire puisse balayer l'intégralité de cette enceinte de chauffage 22, en léchant la périphérie des unités de stockage 16.

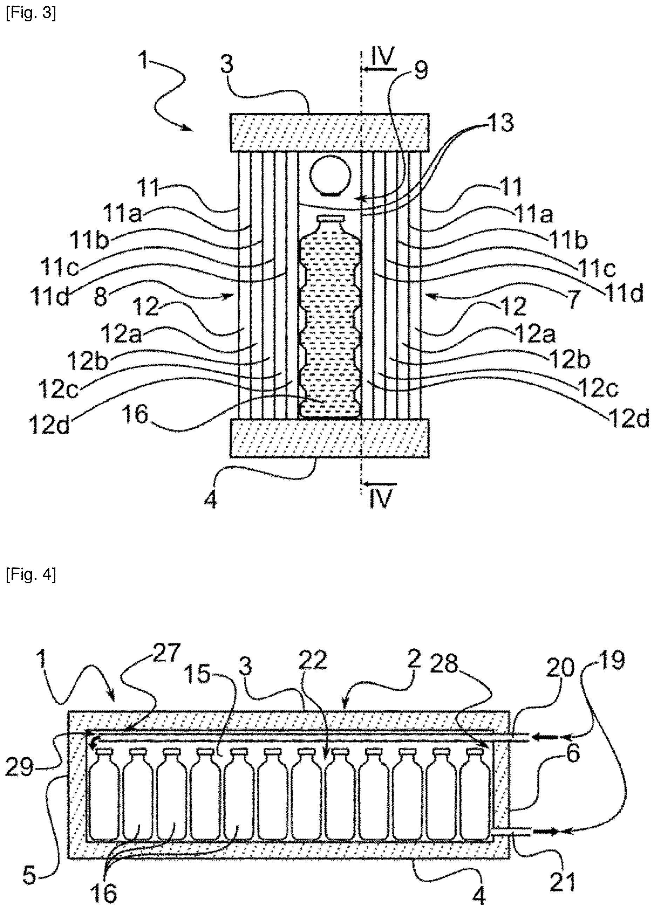

Cependant, selon un mode de réalisation préférentiel, tant la conduite d'entrée 20 que la conduite de sortie 21 débouchent dans l'enceinte de chauffage 22 au niveau d'une même extrémité latérale 27, l'une de ces conduites (la conduite d'entrée 20 dans le mode de réalisation représenté) étant prolongée intérieurement dans l'enceinte de chauffage 22 de sorte que son extrémité débouchante 29 se situe à l'extrémité latérale opposée 28 de cette enceinte de chauffage 22, comme illustré dans la figure 4.

A noter que la circulation de ce fluide caloporteur secondaire au travers de l'enceinte de chauffage 22 peut être par convection ou forcée, par exemple au moyen d'un ventilateur non représenté dans les dessins.

Dans la variante de réalisation visible dans la figure 3, la paroi arrière 8 du dispositif de panneau 1 selon l'invention est conçue de manière similaire à la paroi avant 7.

Ainsi, cette paroi arrière 8 est substantiellement constituée, depuis le côté externe 10, en direction du volume intérieur 9 de ce dispositif 1 :
- d'au moins deux plaques en matériau translucide 11, 11a, 11b, 11c, 11d préférentiellement transparent, entretoisées d'une lame 12, 12a, 12b, 12c d'un fluide gazeux qui peut être, là encore de l'air ou tout autre type de gaz;
- d'une plaque absorbante 13 des rayonnements lumineux entretoisée d'une lame 12d d'un fluide gazeux par rapport à la plaque en matériau translucide 11d du côté interne 14 au volume intérieur 9 de cette paroi arrière 8.

Avantageusement, la ou les unités de stockage 16 de fluide caloporteur sont au moins en contact avec cette plaque absorbante 13 de la paroi arrière 8.

Selon encore une autre particularité de l'invention, ce dispositif de panneau solaire thermique à inertie 1 comporte sur le côté externe 23 de la paroi de dessus 3 et la paroi de dessous 4 et/ou la première paroi latérale 5 et la seconde paroi latérale 6 des moyens d'emboitement réciproque 24 de type mâle/femelle conçus pour emboîter, selon le cas, deux dispositifs de panneau 1 l'un sur l'autre et/ou l'un à côté de l'autre. De tels moyens d'emboitement réciproque peuvent emprunter la forme de rainure 25 et languette 26.

Ainsi, sur le côté externe 23 de la paroi de dessus 3 d'un dispositif 1peuvent être ménagées une ou plusieurs languettes, susceptibles de venir s'engager par emboîtement dans une ou des rainures aménagées en adéquation du coté externe 23 de la paroi de dessous 4 du dispositif 1 superposé. On peut encore imaginer une combinaison de languette et rainure du côté externe 23 de la paroi de dessus 3 d'un dispositif 1 définie apte à coopérer avec une combinaison adaptée de rainure et languette ménagée sur le côté externe 23 de la paroi de dessous 4 du dispositif 1 superposé.

De même, sur le côté externe 23 de la première paroi latérale 5 d'un dispositif 1 peuvent être ménagées une ou plusieurs languettes, susceptibles de venir s'engager par emboîtement dans une ou des rainures aménagées en adéquation du coté externe 23 de la seconde paroi latérale 6 du dispositif 1 juxtaposé. On peut encore imaginer une combinaison de languette et rainure du côté externe 23 de la première paroi latérale 5 d'un dispositif 1 définie apte à coopérer avec une combinaison adaptée de rainure et languette ménagée sur le côté externe 23 de la seconde paroi latérale 6 du dispositif 1 juxtaposé.

Ainsi, de tels dispositifs de panneau selon l'invention sont susceptibles de constituer des modules de construction.

## Revendications

1. Dispositif de panneau solaire thermique à inertie 1 comportant, essentiellement, une paroi périphérique 2, une paroi avant 7 et une paroi arrière 8 délimitant un volume intérieur 9, au moins la paroi périphérique 2 est constituée en un matériau isolant rigide, **caractérisé en ce que** :
- la paroi avant 7 est substantiellement constituée, depuis le côté externe 10 en direction du volume intérieur 9 de ce dispositif 1 :
• d'au moins deux plaques en matériau translucide 11, 11a, 11b, 11c, 11d, préférentiellement transparent, entretoisées d'une lame 12, 12a, 12b, 12c d'un fluide gazeux ;
• d'une plaque absorbante 13 des rayonnements lumineux entretoisée d'une lame 12d d'un fluide gazeux par rapport à la plaque en matériau translucide 11d du côté interne 14 au volume intérieur 9 de cette paroi avant 7 ;
- dans le volume intérieur 9, entre un fond 15 défini par la paroi arrière 8 et la plaque absorbante 13 de la paroi avant 7, est disposée au moins une unité de stockage 16 de fluide caloporteur primaire ;
- le dispositif de panneau solaire thermique à inertie 1 comporte encore un circuit 19 d'un fluide caloporteur secondaire s'étendant entre une conduite d'entrée 20 et une conduite de sortie 21 en traversant une enceinte de chauffage 22 délimitée par le volume intérieur 9 et le les unités de stockage 16 de fluide caloporteur primaire.

2. Dispositif de panneau solaire thermique 1 selon la revendication 1, **caractérisé en ce qu'**il est en forme de parallélépipède rectangle dont la paroi périphérique 2 comprend une paroi de dessus 3, une paroi de dessous 4, une première paroi latérale 5 à une première extrémité latérale et une seconde paroi latérale 6 à une seconde extrémité latérale.

3. Dispositif de panneau solaire thermique 1 selon la revendication 1 ou 2, **caractérisé en ce que** la paroi périphérique 2 et la paroi arrière 8 sont constituées en un matériau isolant rigide, notamment en polystyrène extrudé.

4. Dispositif de panneau solaire thermique 1 selon les revendications 1 ou 2, **caractérisé en ce que** la paroi arrière 8 est constituée, depuis le côté externe 10 en direction du volume intérieur 9 du dispositif 1 :
- d'au moins deux plaques en matériau translucide 11, 11a, 11b, 11c, 11d préférentiellement transparent, entretoisées d'une lame 12, 12a, 12b, 12c d'un fluide gazeux ;
- d'une plaque absorbante 13 des rayonnements lumineux entretoisée d'une lame 12d d'un fluide gazeux par rapport à la plaque en matériau translucide 11d du côté interne 14 au volume intérieur 9 de cette paroi arrière 8.

5. Dispositif de panneau solaire thermique 1 selon l'une quelconque des revendications précédentes, **caractérisé en ce que** les plaques en matériau translucide 11, 11a, 11b, 11c, 11d, préférentiellement transparent, sont en un matériau synthétique de type polycarbonate, polyester, acrylique ou autre.

6. Dispositif de panneau solaire thermique 1 selon l'une quelconque des revendications précédentes, **caractérisé en ce que** la largeur des lames de fluide gazeux 12, 12a, 12b, 12c entre les plaques translucides, préférentiellement transparentes 11, 11a, 11b, est comprise entre 0,5 cm et 5 cm, préférentiellement entre 1cm et 3 cm.

7. Dispositif de panneau solaire thermique 1 selon la revendication 6, **caractérisé en ce que** la largeur des lames de fluide gazeux 12, 12a, 12b, 12c entre les plaques translucides, préférentiellement transparentes 11, 11a, 11b, est de l'ordre de 2cm.

8. Dispositif de panneau solaire thermique 1 selon l'une quelconque des revendications précédentes, **caractérisé en ce que** la lame de fluide gazeux 12d entre la plaque absorbante 13 par rapport à la plaque en matériau translucide, préférentiellement transparent 11d du côté interne 14 au volume intérieur 9 de la paroi avant 7 est comprise entre 0,5 cm et 5 cm, préférentiellement entre 1cm et 3 cm.

9. Dispositif de panneau solaire thermique 1 selon l'une quelconque des revendications précédentes, **caractérisé en ce que** les plaques en matériau translucide, préférentiellement transparent, 11, 11a, 11b, 11c, 11d, et la plaque absorbante 13 sont insérées dans des rainures 17 adaptées que comporte la paroi périphérique 2 sur son côté 18 orienté en direction du volume intérieur 9 du dispositif de panneau 1.

10. Dispositif de panneau solaire thermique 1 selon l'une quelconque des revendications précédentes, **caractérisé en ce que** les unités de stockage 16 de fluide caloporteur sont conçues par des bouteilles recyclées en matière synthétique.

11. Dispositif de panneau solaire thermique 1 selon l'une quelconque des revendications précédentes, **caractérisé en ce que** la ou les unités de stockage 16 de fluide caloporteur sont au moins en contact avec la plaque absorbante 13.

12. Dispositif de panneau solaire thermique 1 selon l'une quelconque des revendications précédentes, **caractérisé en ce qu'**il comporte sur le côté externe 23 de la paroi de dessus 3 et la paroi de dessous 4 et/ou la première paroi latérale 5 et la seconde paroi latérale 6 des moyens d'emboitement réciproque 24 de type mâle/femelle conçus pour emboîter, selon le cas deux dispositifs de panneau 1 superposés et/ou juxtaposés.

13. Utilisation de dispositifs de panneau selon l'une quelconques des revendications précédentes en tant que module de construction. 1
